(19) Europäisches Patentamt
European Patent Office
Office européen des brevets

(11) EP 2 662 797 A1

(12) EUROPEAN PATENT APPLICATION
published in accordance with Art. 153(4) EPC

(43) Date of publication:
13.11.2013 Bulletin 2013/46

(51) Int Cl.:
G06F 21/30 (2013.01)    H04L 9/32 (2006.01)

(21) Application number: 12807496.0

(22) Date of filing: 06.07.2012

(86) International application number:
PCT/JP2012/067353

(87) International publication number:
WO 2013/005840 (10.01.2013 Gazette 2013/02)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 07.07.2011 JP 2011150896

(71) Applicant: NTT DOCOMO, INC.
Chiyoda-ku,
Tokyo 100-6150 (JP)

(72) Inventors:
• TSUKAMOTO, Masakatsu
Tokyo 100-6150 (JP)

• OTA, Manabu
Tokyo 100-6150 (JP)
• MORINAGA, Yasuo
Tokyo 100-6150 (JP)
• HIGUCHI, Takeshi
Tokyo 100-6150 (JP)

(74) Representative: MERH-IP
Matias Erny Reichl Hoffmann
Paul-Heyse-Strasse 29
80336 München (DE)

(54) **MOBILE INFORMATION TERMINAL, ACTION FEATURE LEARNING METHOD, AND ACTION FEATURE AUTHENTICATION METHOD**

(57)    A mobile information terminal that can authenticate an authorized user by using behavioral features acquired when the user makes small movements in a limited movable range is provided. The mobile information terminal includes a gripping feature sensor that acquires gripping features; a behavioral feature sample acquisition section that acquires time-series data of gripping features in a fiddling session as samples of behavioral features; a switch that puts the mobile information terminal into either a learning mode or an authentication mode; a template learning section that learns an authentication template by using the samples of behavioral features when the mobile information terminal is in the learning mode; an authentication section that authenticates the user by comparing the samples of behavioral features with the learned authentication template when the mobile information terminal is in the authentication mode; and an unlock section that unlocks all or some of the functions of the mobile information terminal when the authentication succeeds.

FIG. 4

100  PORTABLE TERMINAL

**Description**

TECHNICAL FIELD

The present invention relates to a mobile information terminal that authenticates an authorized user with samples of behavioral features acquired in a fiddling session, a behavioral feature learning method, and a behavioral feature authentication method.

BACKGROUND ART

Recently, various types of financial services, such as electronic money, have become more widespread as mobile information terminals have gained higher functionality. In addition, as mobile information terminals have gained higher functionality, the terminals have been used to store many pieces of private information, such as addresses, emails, photos, and website browsing history. Conventionally, security has been maintained for information handled with mobile information terminals by authentication performed when starting to use the mobile information terminals. Recently, biometric authentication utilizing biometric information has been coming into widespread use as an authentication method that achieves a high level of security and a high level of convenience simultaneously. Fingerprint authentication, iris authentication, and some other biometric authentication systems are commonly known. A problem in the fingerprint authentication system is that there are a large number of people to whom authentication devices cannot be applied because their biometric information cannot be  acquired due to worn fingerprints or excessive sweating. A problem in the iris authentication system is that it requires a relatively difficult step in which the person has to align his or her iris with a camera to provide biometric information.

The authentication device (portable terminal) in Patent Literature 1 has solved the problems indicated above by storing time-series data of acceleration and angular velocity extracted from arm-swing behavior and using this data for authentication. The authentication device (portable terminal) in Patent Literature 1 includes a detection section 20, a recognition section 21, an extraction section 22, a normalization section 23, a storage 24, a similarity calculation section 25, and a determination section 26. The detection section 20 includes an acceleration sensor and a gyroscope and outputs time-series data of acceleration, angular velocity, and the like depending on the arm-swing behavior. The extraction section 22 in the recognition section 21 extracts data of the block to be used for authentication, from the time-series data. The normalization section 23 normalizes the extracted data into data in a predetermined block. The similarity calculation section 25 calculates the degree of similarity with the stored data of the arm-swing behavior of the user, stored beforehand in the storage 24. If the degree of similarity is equal to or greater than a determination threshold D, the determination section 26 identifies the person as an authorized user; if the degree of similarity is smaller than the determination threshold D, the determination section 26 determines that the person is not an authorized user. The authentication device (portable terminal) in Patent Literature 1 authenticates the authorized user by his or her arm-swing behavior, which is  one of the biometric features that would be hard to be reproduced by another person but is easy to be reproduced by the authorized user, with a high level of security.

Patent Literature 1: Japanese Patent Application Laid Open No. 2007-193656

DISCLOSURE OF THE INVENTION

PROBLEMS TO BE SOLVED BY THE INVENTION

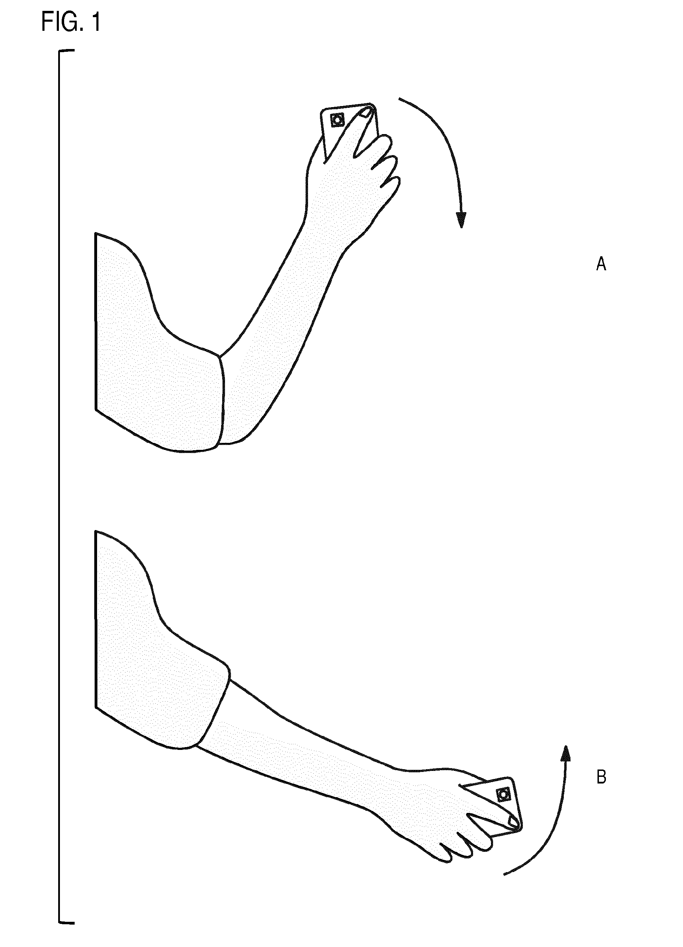

Problems with the authentication device in Patent Literature 1 will be described with reference to Fig. 1. Fig. 1 is a view showing an example of arm-swing behavior for arm-swing authentication by the authentication device in Patent Literature 1, which uses a conventional technology. As shown in Fig. 1, the authentication device in Patent Literature 1 is based on a technology that extracts features of individuals found in a single swing of the forearm. For authentication by the authentication device (portable terminal) in Patent Literature 1, the user must raise his or her hand to shoulder height while gripping the authentication device in the hand (state shown in Fig. 1A, for example), and swing it down from that position such that a motion trajectory of a sufficient length for authentication can be acquired. After the swing, the state of the arm is as shown in Fig. 1B, for example. The arm-swing style for providing time-series data for authentication varies from individual to individual. In authentication, however, a space of at least 70 to 90 centimeters around chest height is needed in front of the user. Actually, the user may want to use the portable terminal when there is no space of 70 to 90 centimeters in front of the user, such as, in a crowded train or in an  elevator. When the user is on the rear seat of a car, it would be hard to have a sufficient space because of the backrest of the front seat, except for a very large vehicle. Moreover, swinging the arm in a public place involves the danger of striking another person. If the user releases the authentication device (portable terminal) by mistake in the arm-swing behavior, the device will be thrown down or forward and could be damaged or broken. The thrown authentication device (portable terminal) could hit another person.

In view of this risk, an object of the present invention is to provide a mobile information terminal that can authenticate the user based on behavioral features that can be acquired in small movements the user can make in a limited movable range.

MEANS TO SOLVE THE PROBLEMS

A mobile information terminal of the present invention authenticates an authorized user by using samples of behavioral features acquired in a fiddling session and includes a gripping feature sensor, a behavioral feature sample acquisition section, a switch, a template learning section, an authentication section, and an unlock section. The gripping feature sensor acquires gripping features. The behavioral feature sample acquisition section acquires time-series data of gripping features in the fiddling session as samples of behavioral features. The switch puts the mobile information terminal into either a learning mode or an authentication mode. The template learning section learns an authentication template by using the samples of behavioral features, when the mobile information terminal is in the learning mode. The authentication section authenticates the authorized user by comparing the samples of behavioral features with the learned authentication template when the mobile information terminal is in the authentication mode. The unlock section unlocks all or some of the functions of the mobile information terminal when the authentication succeeds.

EFFECTS OF THE INVENTION

The mobile information terminal according to the present invention can authenticate the authorized user by using behavioral features that can be acquired in small movements that the user can make in a limited movable range.

BRIEF DESCRIPTION OF THE DRAWINGS

Fig. 1 is a view showing an example of arm-swing behavior for authentication by conventional arm-swing authentication;
Fig. 2 is a view showing an example of fiddling for authentication by behavioral feature authentication in the present invention;
Fig. 3 is a view showing pressure sensor arrays that may be included in portable terminals according to all embodiments of the present invention and an example of a gripping pressure distribution acquired by the pressure sensors;
Fig. 4 is a block diagram showing the configuration of a portable terminal according to a first embodiment;
Fig. 5 is a block diagram showing the configuration of a portable terminal according to a second embodiment;
Fig. 6 is a block diagram showing the configuration of a portable terminal according to a third embodiment;
Fig. 7 is a block diagram showing the configuration of a portable terminal according to a fourth embodiment;
Fig. 8 is a flowchart illustrating a learning operation of the portable terminal according to the first or second embodiment;
Fig. 9 is a flowchart illustrating an authentication operation of the portable terminal according to the first or second embodiment;
Fig. 10 is a flowchart illustrating a learning operation of the portable terminal according to the third or fourth embodiment;
Fig. 11 is a flowchart illustrating an authentication operation of the portable terminal according to the third or fourth embodiment.

BEST MODES FOR CARRYING OUT THE INVENTION

Embodiments of the present invention will be described below in detail. Components having the same functions will be denoted by the same reference numerals, and an overlapping description of those components will be avoided.

Mobile information terminal

Devices realizing a mobile information terminal of the present invention include portable terminals, PDAs, portable game machines, electronic notepads, and electronic book readers. In addition to those devices, any device that satisfies the following three conditions can be the mobile information terminal of the present invention: (1) The device is gripped by the hand when used and can acquire gripping features while it is being used; (2) the device is compact and easy to use and can be a target of so-called fiddling, such as turning and shifting in the hand; and (3) the device involves the risk of losing private information or valuable information if it is lost or stolen. In the description of the embodiments, an example of the portable terminal will be described in detail.

Fiddling

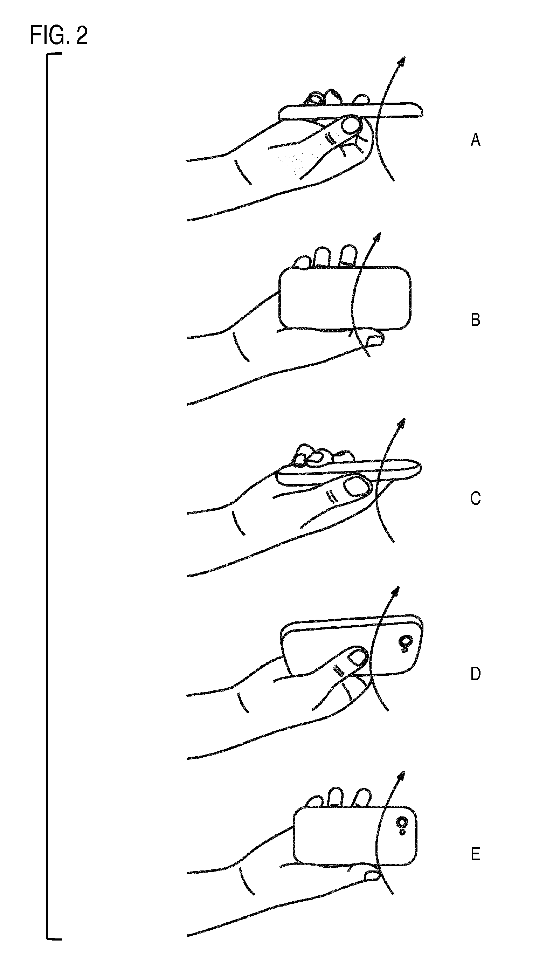

Portable terminals 100, 200, 300, and 400 according to all embodiments of the present invention authenticate an authorized user by using time-series variations in a distribution of gripping features on the housing of the terminal while the user is fiddling with it. Examples of user's fiddling behavior will be described with reference to Fig. 2. Fig. 2 is a view showing examples of fiddling for authentication by the behavioral feature authentication in the present invention. For example, user's fiddling behavior is a time-series combination of simple movements that can be made in the palm of the user's hand, such as turning the portable terminal round, touching the portable terminal with the fingers, rubbing the portable terminal with the fingers, and flicking a finger against the portable terminal, as shown in Figs. 2A to 2E. According to the present invention, the portable terminal can authenticate the user by using behavioral features that can be acquired in small movements (fiddling) that the user can make in a limited movable range.

Samples of behavioral features

Samples of behavioral features obtained by the portable terminals 100, 200, 300, and 400 according to all the embodiments of the present invention will be described next. The way of fiddling with the portable terminal varies from individual to individual, and time-series variations in gripping features obtained in fiddling are excellent behavioral features for use in authentication. In the present invention, time-series data of gripping features in fiddling are acquired as samples of behavioral features and used for authentication. Physical quantities that can be used as samples of behavioral features include time-series data of a gripping pressure distribution, a gripping geometry distribution, and a gripping temperature distribution in fiddling, for example. As the samples of behavioral features, the time-series data of the gripping pressure distribution, for example, can be acquired by disposing arrays of pressure sensors over faces of the housing of the portable terminal 100, 200, 300, or 400. The time-series data of the gripping geometry distribution can be acquired by disposing arrays of CCD (CMOS) sensors. The time-series data of the gripping temperature distribution can be acquired by disposing arrays of infrared sensors. If the portable terminal has an operation key (touch sensitive panel) on the rear face, the time-series data of gripping features can be acquired by recording time-series variations in the pressing state (whether the operation key or the touch sensitive panel is pressed) of the operation key (touch sensitive panel) in fiddling.

Gripping feature sensor

In the present invention, time-series data of gripping features in fiddling are acquired as samples of behavioral features and are used for authentication, as described above. Sensors that detect the gripping features in fiddling can be pressure sensors, CCD (CMOS) sensors, infrared sensors, and the like, as described above, and these sensors are generically referred to as gripping feature sensors. In the embodiments described later, pressure sensors are used as gripping feature sensors, and time-series data of the gripping pressure distribution are used as samples of behavioral features.

Pressure sensor array 105

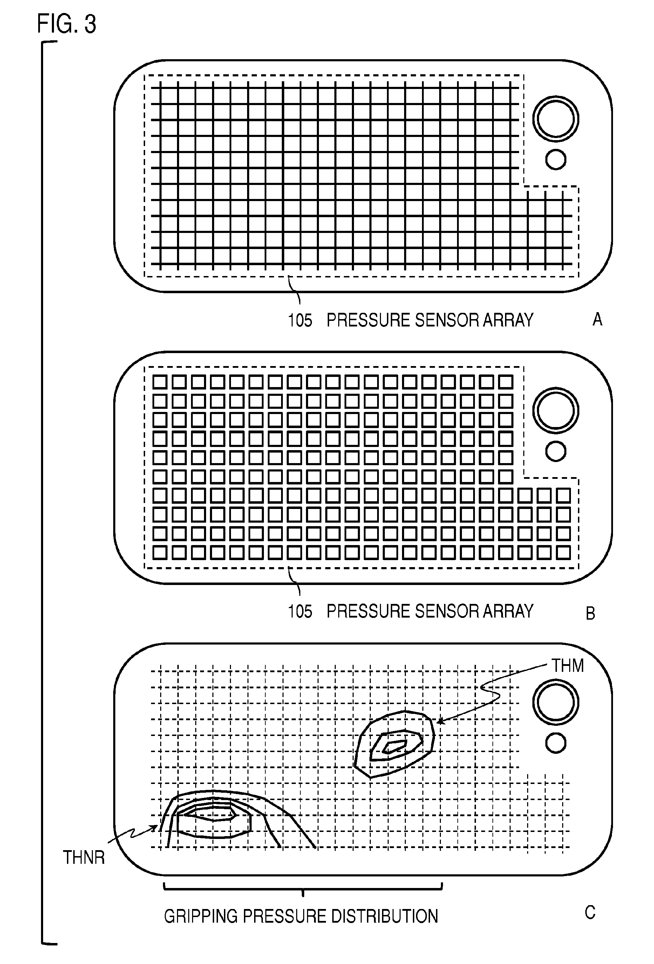

Acquisition of time-series data of the gripping pressure distribution by a pressure sensor array 105 in a fiddling session will be described in detail with reference to Fig. 3. Fig. 3 is a view showing the pressure sensor array 105 included in the portable terminals 100, 200, 300, and 400 according to all the embodiments of the present invention and an example of the gripping pressure distribution acquired by the pressure sensor array 105. The portable terminal 100, 200, 300, or 400 shown in Fig. 3 is a general portable terminal with a touch sensitive panel. The portable terminal included in the mobile information terminal of the present invention does not necessarily have a touch sensitive panel and may be a portable terminal with operation keys. The portable terminal may have any shape, such as the folding type, bar type and sliding type. Specifically, the pressure sensor array 105 may have a sensor sheet structure, for example, as shown in Fig. 3A, and the sensor sheet may be disposed allover the rear face of the portable terminal 100, 200, 300, or 400 (the touch sensitive panel is on the front face). The pressure sensor sheet structure includes a resin layer having rows of electrode wires arranged at regular intervals and a resin layer having columns of electrode wires arranged at regular intervals, and the resin layers are laid on top of one another with the electrode wire faces facing each other. A thin layer of special ink (pressure-sensitive conductive ink) is disposed on the electrode wires. When no pressure is applied, the rows of electrode wires (rows of electrodes) are slightly in contact with the columns of electrode wires (columns of electrodes). When pressure is applied on both sides of the sensor sheet, the pressure-sensitive conductive ink is pressed, and the electrical resistance decreases in inverse proportion to the applied pressure at the points of contact between the rows of electrodes and the columns of electrodes. By determining the values of the pressure applied to the points of contact of electrode wires from the read changes in electrical resistance, a gripping pressure distribution can be obtained. In another example, the pressure sensor array 105 may include small pressure sensors (2 mm square, about 1 mm thick) such as MEMS pressure sensors disposed at regular intervals in rows and columns on the rear face of the portable terminal 100, 200, 300, or 400, as shown in Fig. 3B. MEMS (micro-electro-mechanical-systems) devices include sensors or electronic circuits integrated on a single silicon substrate or the like. Figs. 3A and 3B merely show examples of arrangement. The arrangement of the pressure sensor array 105 is not limited to the rear face of the portable terminal 100, 200, 300, or 400. The pressure sensor array may be disposed on a side face.

Gripping pressure distribution

If the portable terminal 100, 200, 300, or 400 has the pressure sensor array 105 (enclosed by a dashed line in Figs. 3A and 3B) disposed to detect external gripping pressure on the rear face, a gripping pressure distribution as shown in Fig. 3C can be created by analyzing signals from individual pressure sensors in the pressure sensor array 105. The gripping pressure distribution in Fig. 3C shows clear features of the user's hands, fingers, and gripping force, such as a gripping pressure (THNR) generated in the area of contact between the ball of the thumb and the rear face of the portable terminal, in the bottom left corner of the figure, and a gripping pressure (THM) in the area of contact between the right thumb and the rear face of the portable terminal, in a slightly upper right part of the center. The time-series data of the gripping pressure distribution obtained in this way can be used as samples of behavioral features in the present invention.

Authentication template, template learning section 135, and authentication section 160

An authentication template used for authentication and learned by a template learning section 135 included in the portable terminals 100, 200, 300, and 400 according to all the embodiments of the present invention will now be described. The authentication template is a model representing the user's gripping features. The template learning section 135 learns the authentication template from the averages or the like of the time-series data of gripping features (samples of behavioral features) acquired from the user in fiddling. An authentication section 160 compares the learned authentication template with new samples of behavioral features obtained after learning. The authentication section 160 determines whether the new samples of behavioral features obtained after learning and the authentication template belong to the same person, by examining the magnitude of a value (vector-to-vector distance, such as Mahalanobis' generalized distance) obtained by the comparison.

Examples of the distance serving as a determination criterion, described earlier, will be explained below. It is assumed here, for example, that a pressure value $x_{i,j}$ was acquired from the i-th sensor element in the j-th measurement performed for learning, where i = 1, 2, ..., n, j = 1, 2, ..., m, n indicates the number of sensor elements and is an integer equal to 2 or more, and m indicates the number of gripping feature measurements for learning and is an integer equal to 2 or more. The average of the pressure values, the variance, and the vectors of the average and the variance are defined as follows:

$$\overline{x}_i = \frac{1}{m}\left(\sum_{j=1}^{m} x_{i,j}\right)$$

$$s_i^2 = \frac{1}{m}\sum_{j=1}^{m}(\overline{x}_i - x_{i,j})^2$$

$$\mathbf{X} = (\overline{x}_1, \overline{x}_2, \cdots, \overline{x}_n); \quad \mathbf{S}^2 = (s_1^2, s_2^2, \cdots, s_n^2)$$

The authentication template is indicated with a subscript "le", data of the authentication target, acquired for determination, is indicated with a subscript "self", and data of other people is indicated with a subscript "Oth". The

Mahalanobis' generalized distance $f_1$ is given by the following expression.
$$f_1 = \left[ \sum_{i=1}^{n} \left( \frac{x_i -_{le}\overline{x}_i}{s_i} \right)^2 \right]^{1/2}$$

As another example distance, the Euclid distance $f_2$ can be defined by the following expression.
$$f_2 = \left[ \sum_{i=1}^{n} (x_i -_{le}\overline{x}_i)^2 \right]^{1/2}$$

As still another example distance, the Manhattan distance $f_3$ can be defined by the following expression.
$$f_3 = \sum_{i=1}^{n} | x_i -_{le}\overline{x}_i |$$

These three distances can be used to perform authentication with the following determination expression in common. When the threshold used to determine other people is defined as $x_{thre}$, the following expression can be used to determine other people.

$$x_{thre} <_{Oth}f$$

The threshold $x_{thre}$ is determined to satisfy the following condition after the distance $_{self}f$ is calculated after learning.

$$_{self}f < x_{thre} <_{Oth}f$$

Control application 115 (in learning)

In the present invention, samples of behavioral features need to be acquired both in learning the authentication template and in authentication. The portable terminals 100 and 200 in first and second embodiments of the present invention include a control application 115 that is needed to start learning or authentication. Before the portable terminal 100 or 200 finishes learning the authentication template, a learning start function of the control application 115 runs automatically at regular intervals. The activated control application 115 displays a confirmation message saying "Start learning for fiddling authentication?" for the user on the display screen of the portable terminal 100 or 200, giving the user some choices to select in response to the confirmation message, such as "Start now", "Ask me later", and "Disable fiddling authentication". When the user selects "Start now", the control application 115 starts learning and generates and outputs a learning start signal. A switch 125, which will be described later, receives the learning start signal and puts the portable terminal 100 into a learning mode. When the learning start signal is received, a behavioral feature sample acquisition section 120, which will be described later, acquires the output of the pressure sensor array 105 (or an environmental sensor 210, which will be described later) for a predetermined time after the detection of the signal, as samples of behavioral features that are needed to learn the authentication template. After selecting "Start now" offered by the control application 115, the user fiddles with the portable terminal for a predetermined period of time after the selection. If the number Sm of acquired samples of behavioral features falls below the number SFm of learning start samples needed to learn the authentication template (Sm < SFm), the control application 115 displays "Try again" and "End" on the display screen of the portable terminal 100 or 200 after a predetermined period of time elapses. The user selects one of the displayed choices, "Try again" or "End". If the user selects "Try again", the control application 115 generates and outputs a learning start signal. The behavioral feature sample acquisition section 120 acquires the output of the pressure sensor array 105 (or the environmental sensor 210, which will be described later) for a predetermined time after the detection of the learning start signal, as samples of behavioral features that are needed to learn the authentication template. If the necessary number of samples of behavioral features that are needed to learn the authentication template are acquired (Sm > SFm) in the predetermined time, the control application 115 displays a message notifying the user of the end of learning, such as "Learning completed. Fiddling authentication function is now available", and ends automatically.

If the user selects "Ask me later" in response to the confirmation message "Start learning for fiddling authentication?" displayed to the user by the control application 115, the control application 115 displays the same message ("Start learning for fiddling authentication?" with choices "Start now", "Ask me later", and "Disable fiddling authentication") again after a predetermined period of time. If the user selects "Disable fiddling authentication", the control application 115 ends and will not start until the function is enabled again on an advanced settings screen of the portable terminal 100 or 200.

Control application 115 (in authentication)

Locking of the portable terminal and unlocking by successful authentication will be described next. The locking of the portable terminal and unlocking by successful authentication are performed only when the learning of the authentication template described above has been completed. The control application 115 in the portable terminals 100 and 200 in the first and second embodiments of the present invention keeps monitoring the user's input on the touch sensitive panel. If nothing is input from the touch sensitive panel for a predetermined period of time, it is determined that the user is not operating the portable terminal 100 or 200, and all or some of the functions of the portable terminal 100 or 200 are locked. While the portable terminal 100 or 200 is locked, the control application 115 displays a confirmation message "Start fiddling authentication?" on the display screen of the portable terminal 100 or 200, with "Start now" as a user's choice to be selected in response to the confirmation message. When the user selects "Start now", the control application 115 starts authentication and generates and outputs an authentication start signal. When the authentication start signal is received, the behavioral feature sample acquisition section 120, which will be described later, acquires the output of the pressure sensor array 105 (or the environmental sensor 210, which will be described later) for a predetermined period of time after the detection of the signal, as samples of behavioral features that are needed to be compared with the authentication template. After selecting "Start now" displayed by the control application 115, the user fiddles with the portable terminal for a predetermined period of time. The authentication section 160, which will be described later, performs authentication by using the acquired samples of behavioral features. When authentication by the authentication section 160 fails, the control application 115 displays a confirmation message "Authentication fails" on the display screen of the portable terminal 100 or 200. If a predetermined number of authentication failures are allowed, "Try again" may be displayed as a user's choice to be selected in response to the confirmation message. After the predetermined number of authentication failures are repeated, the control application 115 may display a confirmation message "Authentication has failed a specified number of times. You cannot unlock the device. For more information, contact the customer center." on the display screen of the portable terminal 100 or 200 and may keep the portable terminal locked until a special unlock key kept only by an operator at the customer center is used. When the authentication section 160 authenticates the user successfully, an unlock section 180 unlocks the portable terminal 100 or 200.

Environmental sensor 210

Next, the environmental sensor 210 included in the portable terminals 200 and 400 in the second and fourth embodiments of the present invention will be described in detail. The environmental sensor 210 is a sensor that acquires information of the environment surrounding the portable terminal. The only requirement of a sensor to be used as the environmental sensor 210 in the present invention is to measure the behavior of the portable terminal 200 or 400 while the user is fiddling with it, and there are no other requirements. Any combination of sensors can be used as long as they are within the range of allowable size and cost of the portable terminal 200 or 400. Examples of recommendable environmental sensors 210 include acceleration sensors and gyroscopes (angular velocity sensors), for example. Acceleration sensors often utilized in portable terminals are triaxial acceleration sensors. The triaxial acceleration sensors include piezoresistive triaxial acceleration sensors, capacitance triaxial acceleration sensors, and thermal triaxial acceleration sensors. Gyroscopes often utilized in portable terminals are MEMS gyroscopes, for example.

The surrounding environmental information of the portable terminal sensed by the environmental sensor 210 in fiddling is output from the environmental sensor 210 as time-series data. The time-series data of the surrounding environmental information includes time-series data of three-axis acceleration measured by the acceleration sensor and time-series data of angles, angular velocity, and angular acceleration measured by the gyroscope. In this description, the term "time-series data of surrounding environmental information" generally means the time-series data of surrounding environmental information obtained as a result of measurement of the environment surrounding the portable terminal by the environmental sensor 210.

Trigger signal generation section 390 and control application 315

A trigger signal generation section 390 included in the portable terminals 300 and 400 according to the third and fourth embodiments of the present invention will be described next. The trigger signal generation section 390 monitors whether there is a trigger to start learning the authentication template or to start authentication in the portable terminal 300 or 400 according to the third or fourth embodiment of the present invention. Specifically, when a gripping feature distribution is observed when the user grips the portable terminal 300 or 400 in a gripping manner stored in advance (for example, gripping the housing of the portable terminal firmly, holding it in the palm, etc.), the trigger signal generation section 390 determines that learning or authentication begins and outputs a trigger signal to the control application 315. More specifically, when the output of the pressure sensor array 105 exceeds a predetermined threshold, the trigger signal generation section 390 should generate and output the trigger signal. The trigger signal generation section 390 may generate and output the trigger signal when the number of pressure sensors whose outputs exceed the predetermined threshold among the pressure sensors included in the pressure sensor array 105 exceeds a given number. The trigger signal generation section 390 may also generate and output the trigger signal when the output of a pressure sensor of interest at a predetermined position exceeds the predetermined threshold. When the trigger signal is received in learning or authentication, the control application 315 included in the portable terminal 300 or 400 according to the third or fourth embodiment outputs a learning or authentication start signal to the behavioral feature sample acquisition section 120. This is what the control application 115 does when the user selects "Start now". This is the only difference between the control application 315 included in the portable terminals 300 and 400 in the third and fourth embodiments and the control application 115 included in the portable terminals 100 and 200 in the first and second embodiments.
Since the portable terminals 300 and 400 in the third and fourth embodiments include the trigger signal generation section 390, the user can start learning or authentication without selecting an item displayed on the touch sensitive panel.
If the behavioral feature sample acquisition section 120 starts acquiring samples of behavioral features when the user selects an item displayed by the control application 115, as in the portable terminal 100 or 200 in the first or second embodiment, when the acquisition of samples of behavioral features begins, the user's fingers are in the gripping state immediately after the item on the touch sensitive panel is selected, and the user cannot start fiddling with the portable terminal immediately in some cases. If the user has to hold the portable terminal anew or turn it around in preparation to start fiddling with the portable terminal, all those movements such as holding anew and turning around would become noise. This noise can be avoided to some extent by delaying the beginning of acquisition of samples of behavioral features from when the item is selected. It is difficult to eliminate the noise completely.
With the control application 315 included in the portable terminals 300 and 400 in the third and fourth embodiments, the user needs to strongly hold the housing of the portable terminal 300 or 400 in the palm after adjusting the gripping state so that the user can start fiddling with the portable terminal at once. Then, noise becomes unlikely.

First Embodiment

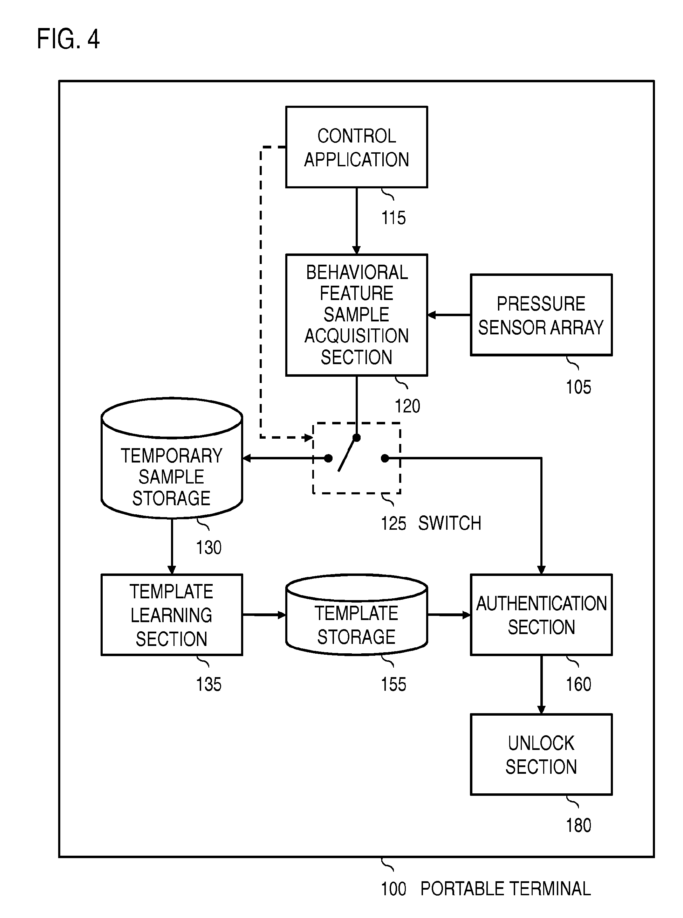

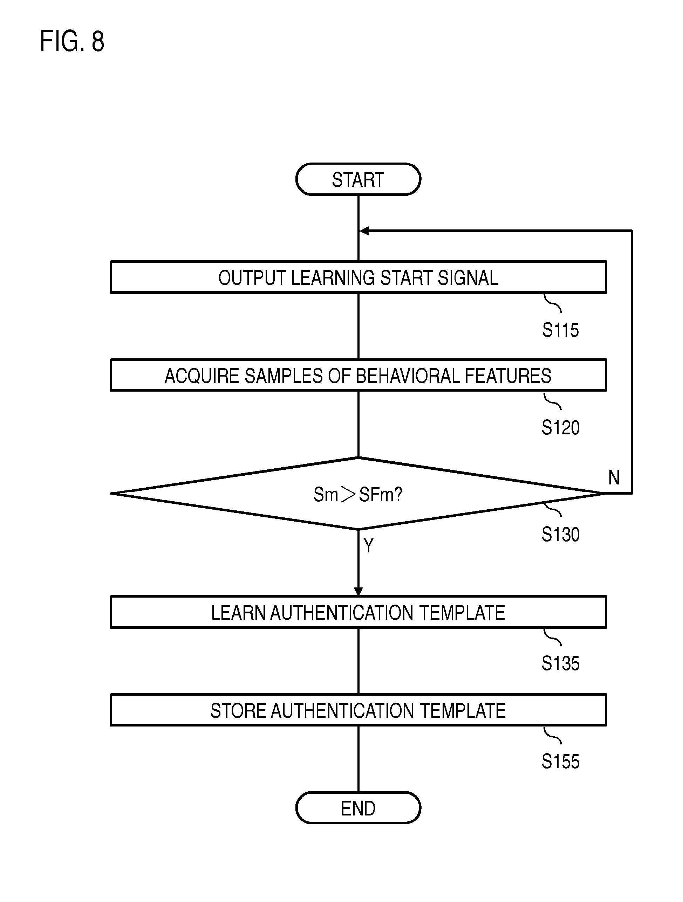

On the basis of the conditions described above, the portable terminal 100 that authenticates the user by using acquired samples of behavioral features according to the first embodiment will be described in detail. The operation in a learning mode of the portable terminal 100 of the first embodiment will be described first with reference to Figs. 4 and 8. Fig. 4 is a block diagram showing the configuration of the portable terminal 100 in this embodiment. Fig. 8 is a flowchart illustrating learning in the portable terminal 100 in this embodiment.
The portable terminal 100 of this embodiment includes the pressure sensor array 105, the control application 115, the behavioral feature sample acquisition section 120, the switch 125, a temporary sample storage 130, the template learning section 135, a template storage 155, the authentication section 160, and the unlock section 180. The pressure sensor array 105 is built in the portable terminal 100, as described earlier. As described in Control application 115 (in learning), the control application 115 displays a predetermined message for the user on the display screen of the portable terminal 100 and generates and outputs a learning start signal when the user selects "Start now" or "Try again" (S115). The switch 125 receives the learning start signal and puts the portable terminal 100 into the learning mode. The behavioral feature sample acquisition section 120 receives the learning start signal from the control application 115 and acquires samples of behavioral features from the pressure sensor array 105 (S120). Let Sm be the number of acquired samples of behavioral features and SFm be the number of learning start samples. The number SFm of learning start samples is predetermined as the number of samples needed to learn the authentication template. Since a sufficiently accurate authentication template cannot be generated by learning the authentication template with a small number of acquired samples of behavioral features, the empirically deduced number of samples that would be needed to provide a highly accurate authentication template is specified as the number SFm of learning start samples. If the number Sm of samples of behavioral features stored in the temporary sample storage 130 exceeds the number SFm of learning start samples (Sm > SFm), the operation proceeds to step S135, where the template learning section 135 learns the authentication template by using the samples of behavioral features (Yes in S130, S135). The template storage 155 stores the learned authentication template (S 155). If the number Sm of samples of behavioral features stored in the temporary sample storage 130 falls below the number SFm of learning start samples (Sm < SFm), the operation returns to the starting point, and when the learning start signal is received, samples of behavioral features are acquired again (No in S130). Steps S 115 and S 120 are repeated until the authentication template is provided (No in S130). The authentication template is determined from the averages of samples of behavioral features (time-series data of the gripping pressure distribution in fiddling) and the like.

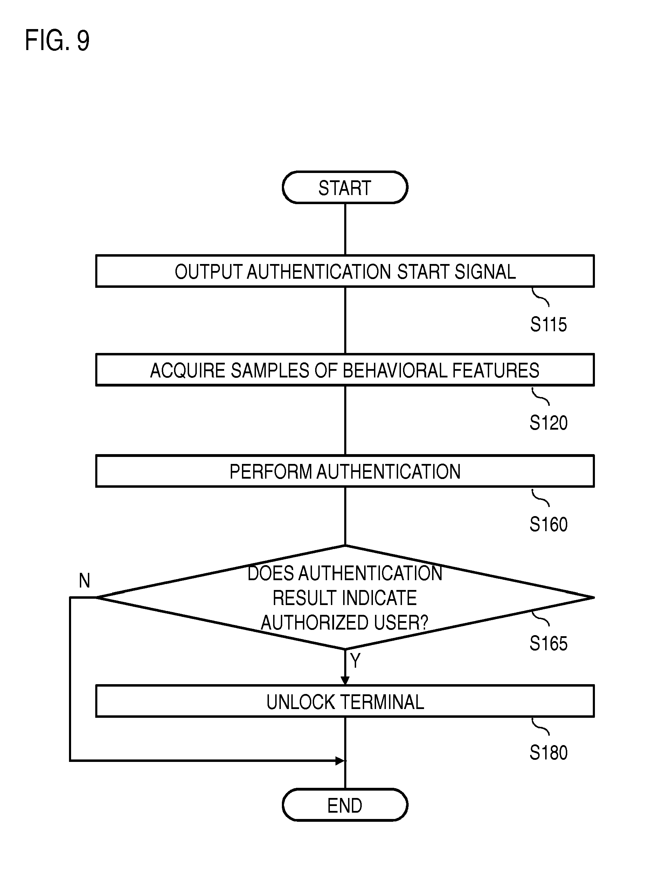

The operation of the portable terminal 100 according to the first embodiment in the authentication mode will be described next with reference to Figs. 4 and 9. Fig. 9 is a flowchart illustrating the authentication operation of the portable terminal 100 in this embodiment. It is assumed that, in the authentication operation, the learning operation described above has already been performed, and the authentication template has already been stored in the template storage 155. As described in Control application 115 (in authentication), if nothing is input from the touch sensitive panel in a predetermined period of time, the control application 115 locks all or some of the functions of the portable terminal 100. When the portable terminal 100 is locked, the control application 115 displays a predetermined message on the display screen of the portable terminal 100. When the user selects "Start now", the control application 115 generates and outputs an authentication start signal (S115). The switch 125 receives the authentication start signal and puts the portable terminal 100 into the authentication mode. The behavioral feature sample acquisition section 120 receives the authentication start signal from the control application 115 and acquires samples of behavioral features from the pressure sensor array 105 (S120). The authentication section 160 then compares the samples of behavioral features with the learned authentication template for authentication (S 160). If authentication fails (No in S165), the portable terminal is not unlocked, and the processing ends. An allowable number of authentication failures may be specified, as described in Control application 115 (in authentication), and the user may perform authentication again. If authentication succeeds (Yes in S 165), the unlock section 180 unlocks all or some of functions of the portable terminal 100 (S180).

The samples of behavioral features and the authentication template can be compared in the following method, for example. The authentication section 160 determines the distance (such as Mahalanobis' generalized distance) between the authentication template and the samples of behavioral features acquired for authentication. If the distance does not exceed a predetermined level, the authentication section 160 determines that the samples of behavioral features have been acquired from the user. If the distance (such as Mahalanobis' generalized distance) between the authentication template and the samples of behavioral features exceeds the predetermined level, it is determined that the samples of behavioral features have been acquired from another person.

In the portable terminal 100 of this embodiment, the behavioral feature sample acquisition section 120 acquires time-series data of gripping features in fiddling that can be performed in a limited space, as samples of behavioral features; the template learning section 135 learns the authentication template from the samples of behavioral features; and the authentication section 160 authenticates the user by comparing the samples of behavioral features with the authentication template. Therefore, the user just makes small movements in a limited movable range, and then authentication can be performed by using behavioral features.

Second Embodiment

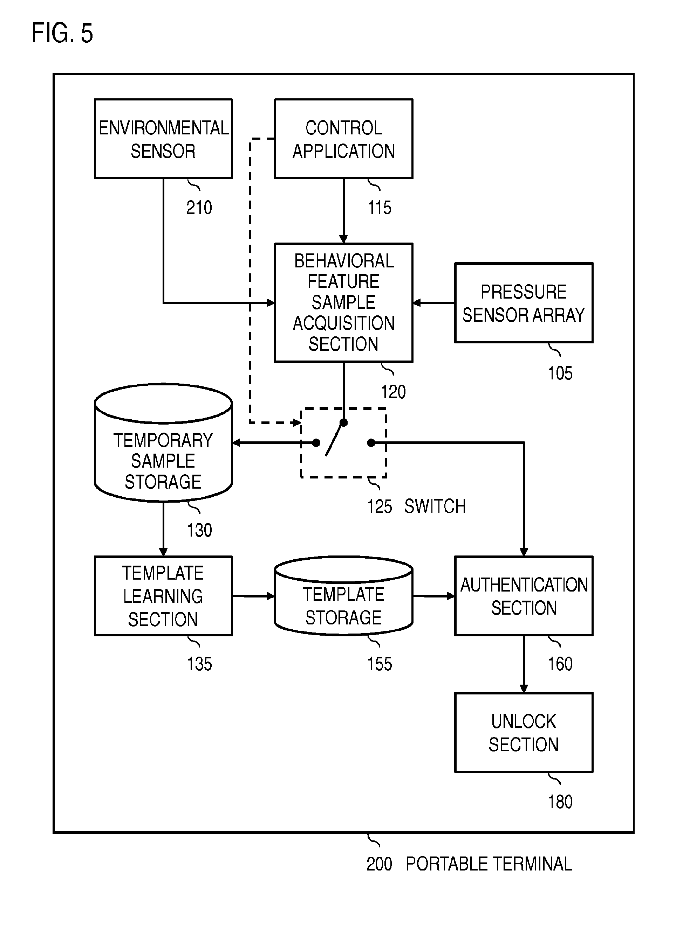

Next, the portable terminal 200 according to the second embodiment, in which user identification accuracy by fiddling is improved by adding a sensor to the portable terminal 100 of the first embodiment, will be described in detail. The learning operation of the portable terminal 200 in the second embodiment will be described with reference to Figs. 5 and 8. Fig. 5 is a block diagram showing the configuration of the portable terminal 200 in this embodiment. Fig. 8 is a flowchart illustrating the learning operation of the portable terminal 200 in this embodiment.

The portable terminal 200 in this embodiment includes the pressure sensor array 105, the environmental sensor 210, the control application 115, the behavioral feature sample acquisition section 120, the switch 125, a temporary sample storage 130, the template learning section 135, a template storage 155, the authentication section 160, and the unlock section 180. The only difference between the portable terminal 200 in this embodiment and the first embodiment is that the environmental sensor 210 is included. The components denoted by the same reference numerals as used in the first embodiment operate as described in the first embodiment, and a description of those components will be omitted in this embodiment. As described in Environmental sensor 210, the environmental sensor 210 is a sensor that acquires information of the environment surrounding the portable terminal 200. Specifically, the sensor can include an acceleration sensor, a gyroscope (angular velocity sensor), or the like.

The environmental sensor 210 senses the information of the environment surrounding the portable terminal 200 while the user is fiddling with the portable terminal 200 and outputs it as time-series data. When the learning start signal output from the control application 115 is received (S 115), the behavioral feature sample acquisition section 120 acquires the time series data of the surrounding environmental information output from the environmental sensor 210 and the time-series data of gripping pressure output from the pressure sensor array 105, as samples of behavioral features (S120). The subsequent part of the operation is the same as in the first embodiment. As in the first embodiment, when the number Sm of samples of behavioral features stored in the temporary sample storage 130 exceeds the number SFm of learning start samples (Sm > SFm), the template learning section 135 learns the authentication template by using all the time-series data of gripping pressure and all the time-series data of surrounding environmental information as samples of behavioral features (S135).

Next, authentication operation of the portable terminal 200 in the second embodiment will be described with reference to Figs. 5 and 9. The authentication operation is the same as the authentication operation of the portable terminal 100 in the first embodiment. The samples of behavioral features acquired for authentication in the first embodiment include just the time-series data of gripping pressure, but in this embodiment, the time-series data of gripping pressure and the time-series data of surrounding environmental information are included.

Since information of the environment surrounding the portable terminal 200 (output values of three-axis acceleration, angular velocity, angular acceleration, etc.) during fiddling is acquired as some of the samples of behavioral features, the portable terminal 200 in this embodiment can identify fiddling behavior of individuals more accurately, in addition to the effects of the portable terminal 100 in the first embodiment. Therefore, the accuracy of the authentication function is improved.

Third Embodiment

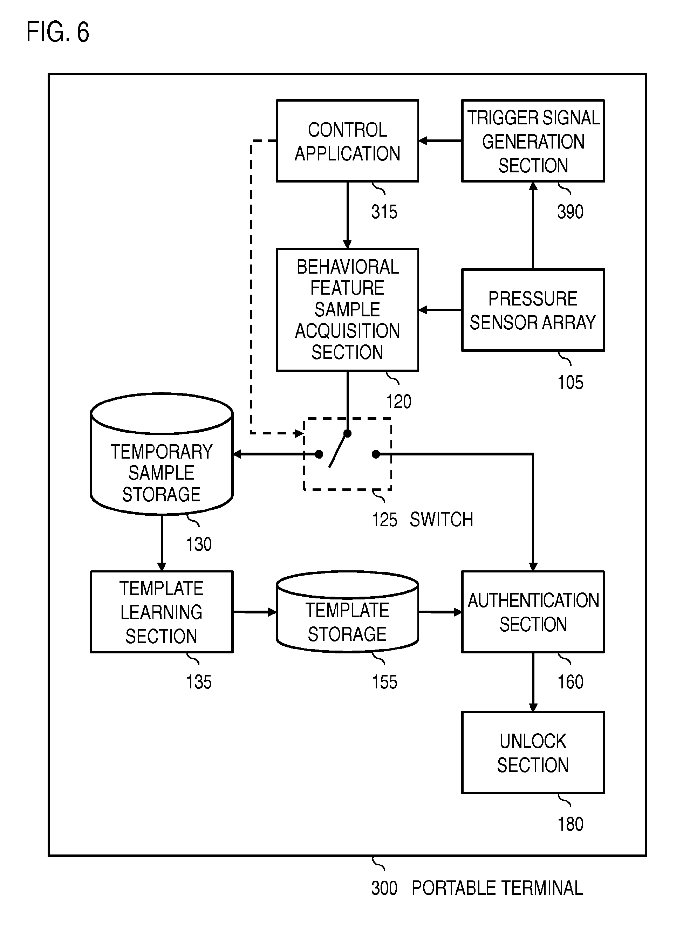

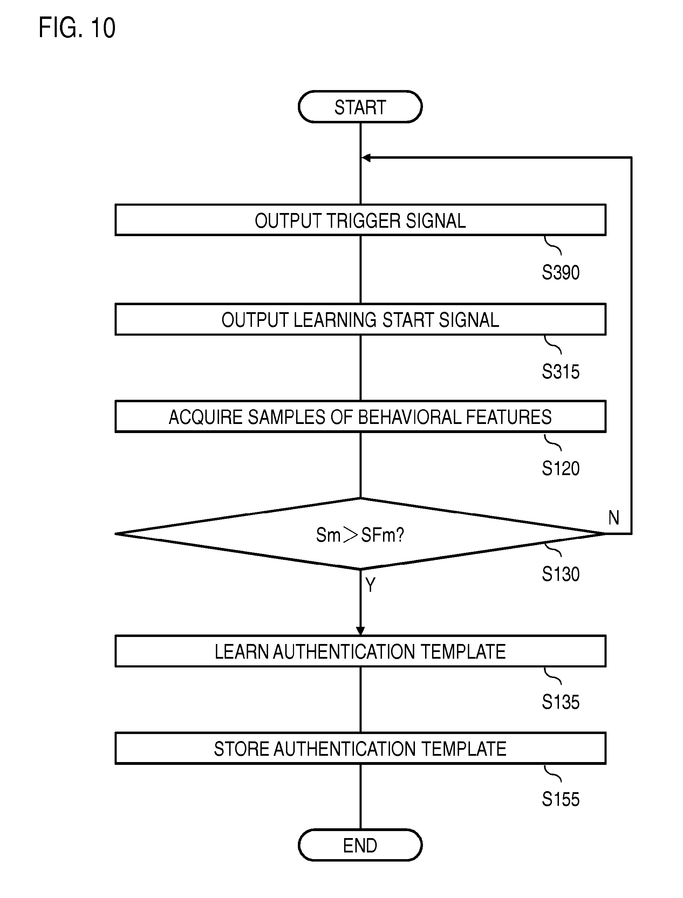

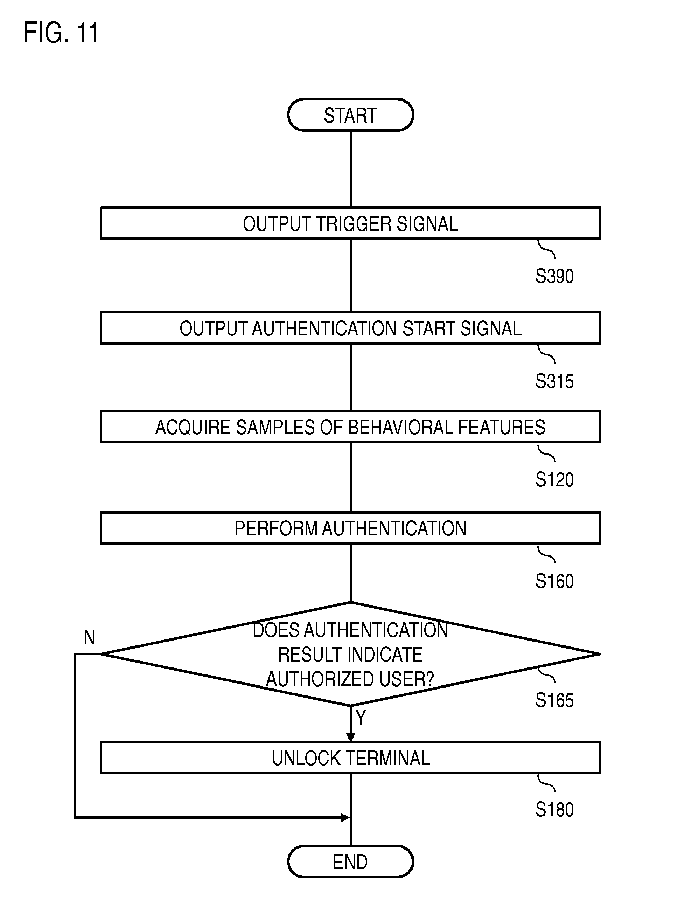

Next, the portable terminal 300 according to the third embodiment, which differs from the portable terminal 100 in the first embodiment in that a trigger signal generation section 390 is added to make it easy to start the learning function and the authentication function by fiddling, will be described in detail. The operation of the portable terminal 300 according to the third embodiment in the learning mode and the authentication mode will be described with reference to Figs. 6, 10, and 11. Fig. 6 is a block diagram showing the configuration of the portable terminal 300 in this embodiment. Fig. 10 is a flowchart illustrating the learning operation of the portable terminal 300 in this embodiment. Fig. 11 is a flowchart illustrating the authentication operation of the portable terminal 300 in this embodiment.

The portable terminal 300 in this embodiment includes the pressure sensor array 105, the control application 315, the behavioral feature sample acquisition section 120, the switch 125, a temporary sample storage 130, the template learning section 135, a template storage 155, the authentication section 160, the unlock section 180, and the trigger signal generation section 390. The portable terminal 300 in this embodiment differs from the first embodiment in that the trigger signal generation section 390 is included and that the control application 115 in the first embodiment is replaced with the control application 315 in this embodiment. The components denoted by the same reference numerals as used in the first embodiment operate in the same way as described in the first embodiment, and a description of those components will be omitted in this embodiment. As described in Trigger signal generation section 390 and control application 315, the trigger signal generation section 390 has a function to monitor whether there is a trigger for starting the authentication template learning operation or the authentication operation. More specifically, when the way in which the user grips the portable terminal 300 (such as gripping the housing of the portable terminal firmly or holding it in the palm), stored in advance, is observed, the trigger signal generation section 390 determines that this is a trigger for starting the learning or authentication operation and outputs a trigger signal to the control application 315. When the trigger signal is received in learning or authentication, the control application 315 outputs a learning start signal in learning and an authentication start signal in authentication (S315). This is the only difference between the control application 315 included in the portable terminal 300 of the third embodiment and the control application 115 included in the portable terminal 100 or 200 in the first or second embodiment. The subsequent operation is the same as in the first embodiment. As in the first embodiment, the behavioral feature sample acquisition section 120 receives the learning or authentication start signal from the control application 315 and acquires samples of behavioral features from the pressure sensor array 105 (S120).

Since the trigger signal generation section 390 is included, as described above, the portable terminal 300 in the third embodiment allows the user to start the learning or authentication operation smoothly without having to select an item displayed on the touch sensitive panel, in addition to the effects of the first embodiment. With the portable terminal 300 in the third embodiment, if the user adjusts his or her gripping state so that he or she can start fiddling at once and then generates a trigger signal by gripping the housing of the portable terminal firmly, for example, the actions of holding the portable terminal anew or turning it around in preparation for starting fiddling can be omitted, and accordingly noise can be reduced.

Fourth Embodiment

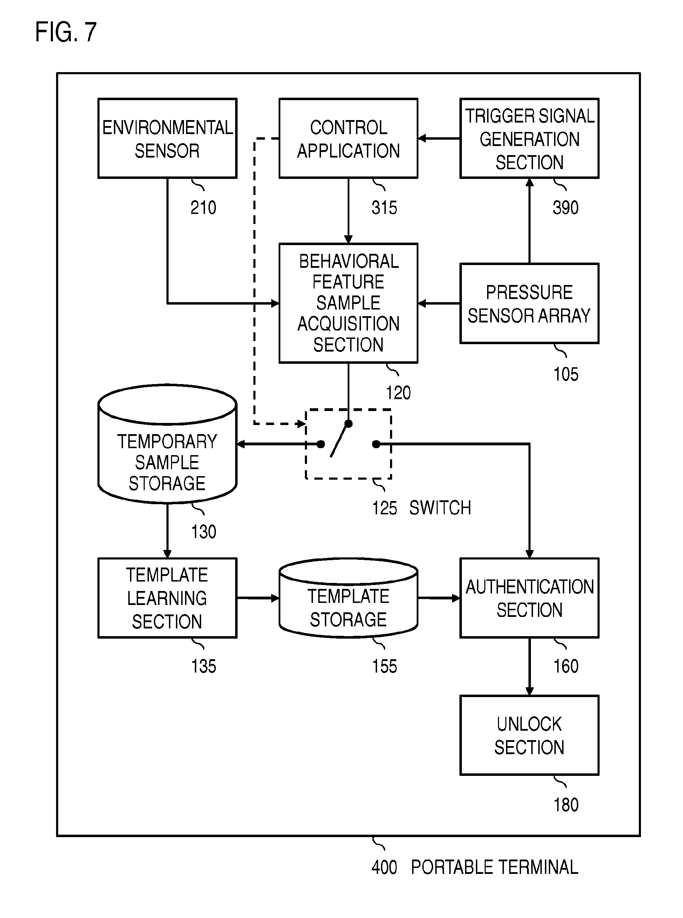

Next, the portable terminal 400 according to the fourth embodiment, which differs from the portable terminal 200 in the second embodiment in that the trigger signal generation section 390 is included to make it easy to start the learning function or the authentication function by fiddling, will be described in detail. The operation of the portable terminal 400 in the fourth embodiment in the learning mode and the authentication mode will be described with reference to Figs. 7, 10, and 11. Fig. 7 is a block diagram showing the configuration of the portable terminal 400 in this embodiment. Fig. 10 is a flowchart illustrating the learning operation of the portable terminal 400 in this embodiment. Fig. 11 is a flowchart illustrating the authentication operation of the portable terminal 400 in this embodiment.

The portable terminal 400 in this embodiment includes the pressure sensor array 105, the environmental sensor 210, the control application 315, the behavioral feature sample acquisition section 120, the switch 125, a temporary sample storage 130, the template learning section 135, a template storage 155, the authentication section 160, the unlock section 180, and the trigger signal generation section 390. The portable terminal 400 in this embodiment differs from the second embodiment in that the trigger signal generation section 390 is included and that the control application 115 in the second embodiment is replaced with the control application 315 in this embodiment. The components denoted by the same reference numerals as used in the second embodiment operate in the same way as described in the second embodiment, and a description of those components will be omitted in this embodiment. As described in Trigger  signal generation section 390 and control application 315, the trigger signal generation section 390 has a function to monitor whether there is a trigger for starting the authentication template learning operation or the authentication operation. More specifically, when the way in which the user grips the portable terminal 400 (such as gripping the housing of the portable terminal firmly or holding it in the palm), stored in advance, is observed, the trigger signal generation section 390 determines that this is a trigger for starting the learning or authentication operation and outputs a trigger signal to the control application 315. When the trigger signal is received in learning or authentication, the control application 315 outputs a learning start signal in learning and an authentication start signal in authentication (S315). This is the only difference between the control application 315 included in the portable terminal 400 of the fourth embodiment and the control application 115 included in the portable terminal 100 or 200 in the first or second embodiment. The subsequent operation is the same as in the second embodiment. As in the second embodiment, the behavioral feature sample acquisition section 120 receives the learning or authentication start signal from the control application 315 and acquires samples of behavioral features from the pressure sensor array 105 and the environmental sensor 210 (S120).

Since the trigger signal generation section 390 is included, as described above, the portable terminal 400 in the fourth embodiment allows the user to start the learning or authentication operation smoothly without having to select an item displayed on the touch sensitive panel, in addition to the effects of the second embodiment. With the portable terminal 400 in the fourth embodiment, if the user adjusts his or her gripping state so that he or  she can start fiddling at once and then generates a trigger signal by gripping the housing of the portable terminal firmly, for example, the actions of holding the portable terminal anew or turning it around in preparation for starting fiddling can be omitted, and accordingly noise can be reduced.

Each type of processing described above may be executed not only time sequentially according to the order in the description but also in parallel or individually when necessary or according to the processing capability of each apparatus that executes the processing. Appropriate changes can be made to the embodiments without departing from the scope of the present invention.

When the configurations described above are implemented by a computer, the processing details of the functions that should be provided by each apparatus are described in a program. When the program is executed by the computer, the processing functions are implemented on the computer.

The program containing the processing details can be recorded in a computer-readable recording medium. The computer-readable recording medium can be any type of medium, such as a magnetic recording device, an optical disc, a magneto-optical recording medium, or a semiconductor memory.

The program is distributed by selling, transferring, or lending a portable recording medium, such as a DVD or a CD-ROM, with the program recorded on it, for example. The program may also be distributed by storing the program in a storage unit of a server computer and transferring the program from the server computer to another computer through a network.

A computer that executes this type of program first stores the  program recorded on a portable recording medium or the program transferred from the server computer in its storage unit. Then, the computer reads the program stored in its storage unit and executes processing in accordance with the read program. In a different program execution form, the computer may read the program directly from the portable recording medium and execute processing in accordance with the program, or the computer may execute processing in accordance with the program each time the computer receives the program transferred from the server computer. Alternatively, the above-described processing may be executed by a so-called application service provider (ASP) service, in which the processing functions are implemented just by giving program execution instructions and obtaining the results without transferring the program from the server computer to the computer. The program of this form includes information that is provided for use in processing by the computer and is treated correspondingly as a program (something that is not a direct instruction to the computer but is data or the like that has characteristics that determine the processing executed by the computer).

In the description given above, each apparatus is implemented by executing the predetermined program on the computer, but at least a part of the processing details may be implemented by hardware.


**Claims**

1.  A mobile information terminal that authenticates an authorized user by using samples of behavioral features acquired in a fiddling session, the mobile information terminal comprising:

    a gripping feature sensor that acquires gripping features;
    a behavioral feature sample acquisition section that acquires time-series data of gripping features in the fiddling session, as the samples of behavioral features;
    a switch that puts the mobile information terminal into either a learning mode or an authentication mode;
    a template learning section that learns an authentication template by using the samples of behavioral features, when the mobile information terminal is in the learning mode;
    an authentication section that authenticates the authorized user by comparing the samples of behavioral features with the learned authentication template, when the mobile information terminal is in the authentication mode; and
    an unlock section that unlocks all or some of the functions of the mobile information terminal when the authentication succeeds.

2.  The mobile information terminal according to Claim 1, further comprising an environmental sensor that acquires surrounding environmental information of the mobile information terminal,
    wherein the behavioral feature sample acquisition section acquires the time-series data of gripping features in the fiddling session and time-series data of the surrounding environmental information in the fiddling session, as  the samples of behavioral features.

3.  The mobile information terminal according to Claim 1 or 2, further comprising a trigger signal generation section that monitors the gripping features acquired by the gripping feature sensor and generates a trigger signal when the acquired gripping features include a predetermined feature,
    wherein the behavioral feature sample acquisition section starts acquisition of the samples of behavioral features when the trigger signal is generated.

4.  A behavioral feature learning method of learning an authentication template by using samples of behavioral features acquired in a fiddling session, the learning method comprising:

    a behavioral feature sample acquisition step of acquiring time-series data of gripping features in the fiddling session as the samples of behavioral features; and
    a template learning step of learning the authentication template by using the samples of behavioral features.

5.  A behavioral feature authentication method using the behavioral feature learning method according to Claim 4, comprising:

    an authentication step of performing authentication by comparing the samples of behavioral features with the learned authentication template; and
    an unlock step of unlocking all or some of the functions of the mobile information terminal when the authentication succeeds.

6.  The behavioral feature learning method according to Claim 4, wherein, in the behavioral feature sample acquisition step, the time-series data  of gripping features in the fiddling session and time-series data of surrounding environmental information in the fiddling session are acquired as the samples of behavioral features.

7.  The behavioral feature authentication method according to Claim 5, wherein, in the behavioral feature sample acquisition step, the time-series data of gripping features in the fiddling session and time-series data of surrounding environmental information in the fiddling session are acquired as the samples of behavioral features.

8. The behavioral feature learning method according to Claim 4 or 6, further comprising a trigger signal generation step of monitoring gripping features acquired by a gripping feature sensor and of generating a trigger signal when the acquired gripping features include a predetermined feature,
wherein, in the behavioral feature sample acquisition step, acquisition of the samples of behavioral features is started when the trigger signal is generated.

9. The behavioral feature authentication method according to Claim 5 or 7, further comprising a trigger signal generation step of monitoring gripping features acquired by a gripping feature sensor and of generating a trigger signal when the acquired gripping features include a predetermined feature,
wherein, in the behavioral feature sample acquisition step, acquisition of the samples of behavioral features is started when the trigger signal is generated.

10. A computer-readable recording medium having recorded thereon a program for executing the method according to one of Claims 4 to 9.

FIG. 1

A

B

FIG. 2

A

B

C

D

E

FIG. 3

105　PRESSURE SENSOR ARRAY　　A

105　PRESSURE SENSOR ARRAY　　B

GRIPPING PRESSURE DISTRIBUTION　　C

FIG. 4

CONTROL APPLICATION
115

BEHAVIORAL FEATURE SAMPLE ACQUISITION SECTION
120

PRESSURE SENSOR ARRAY
105

TEMPORARY SAMPLE STORAGE
130

125 SWITCH

TEMPLATE LEARNING SECTION
135

TEMPLATE STORAGE
155

AUTHENTICATION SECTION
160

UNLOCK SECTION
180

100 PORTABLE TERMINAL

FIG. 5

200  PORTABLE TERMINAL

FIG. 6

300  PORTABLE TERMINAL

FIG. 7

FIG. 8

```
                        ┌─────────────┐
                        │    START    │
                        └──────┬──────┘
                               │
          ┌────────────────────▼─────────────────────────┐
          │        OUTPUT LEARNING START SIGNAL           │──┐
          └────────────────────┬─────────────────────────┘  │
                               │              S115           │
          ┌────────────────────▼─────────────────────────┐  │
          │     ACQUIRE SAMPLES OF BEHAVIORAL FEATURES    │  │
          └────────────────────┬─────────────────────────┘  │
                               │              S120           │
                          ◇────▼────◇                    N   │
                        Sm ＞ SFm?  ─────────────────────────┘
                          ◇─────────◇    S130
                               │ Y
          ┌────────────────────▼─────────────────────────┐
          │         LEARN AUTHENTICATION TEMPLATE         │
          └────────────────────┬─────────────────────────┘
                               │              S135
          ┌────────────────────▼─────────────────────────┐
          │         STORE AUTHENTICATION TEMPLATE         │
          └────────────────────┬─────────────────────────┘
                               │              S155
                        ┌──────▼──────┐
                        │     END     │
                        └─────────────┘
```

FIG. 9

```
                    ┌──────────────┐
                    │    START     │
                    └──────────────┘
                           │
        ┌──────────────────────────────────────────┐
        │   OUTPUT AUTHENTICATION START SIGNAL      │
        └──────────────────────────────────────────┘
                           │                    S115
        ┌──────────────────────────────────────────┐
        │   ACQUIRE SAMPLES OF BEHAVIORAL FEATURES  │
        └──────────────────────────────────────────┘
                           │                    S120
        ┌──────────────────────────────────────────┐
        │          PERFORM AUTHENTICATION           │
        └──────────────────────────────────────────┘
                           │                    S160
                  DOES AUTHENTICATION
       N          RESULT INDICATE
                  AUTHORIZED USER?
                           │ Y                  S165
        ┌──────────────────────────────────────────┐
        │            UNLOCK TERMINAL                │
        └──────────────────────────────────────────┘
                           │                    S180
                    ┌──────────────┐
                    │     END      │
                    └──────────────┘
```

FIG. 10

START

OUTPUT TRIGGER SIGNAL

S390

OUTPUT LEARNING START SIGNAL

S315

ACQUIRE SAMPLES OF BEHAVIORAL FEATURES

S120

$Sm > SFm$? — N

S130

Y

LEARN AUTHENTICATION TEMPLATE

S135

STORE AUTHENTICATION TEMPLATE

S155

END

# FIG. 11

```
                        ┌──────────┐
                        │  START   │
                        └────┬─────┘
                             │
        ┌────────────────────┴────────────────────┐
        │         OUTPUT TRIGGER SIGNAL            │
        └────────────────────┬────────────────────┘
                             │              S390
                             │
        ┌────────────────────┴────────────────────┐
        │     OUTPUT AUTHENTICATION START SIGNAL   │
        └────────────────────┬────────────────────┘
                             │              S315
                             │
        ┌────────────────────┴────────────────────┐
        │    ACQUIRE SAMPLES OF BEHAVIORAL FEATURES│
        └────────────────────┬────────────────────┘
                             │              S120
                             │
        ┌────────────────────┴────────────────────┐
        │         PERFORM AUTHENTICATION           │
        └────────────────────┬────────────────────┘
                             │              S160
                             │
               ◇ DOES AUTHENTICATION ◇
        N      RESULT INDICATE
               AUTHORIZED USER?          S165
                             │ Y
        ┌────────────────────┴────────────────────┐
        │            UNLOCK TERMINAL               │
        └────────────────────┬────────────────────┘
                             │              S180
                        ┌────┴─────┐
                        │   END    │
                        └──────────┘
```

## INTERNATIONAL SEARCH REPORT

| | International application No. |
|---|---|
| | PCT/JP2012/067353 |

A. CLASSIFICATION OF SUBJECT MATTER
*G06F21/20*(2006.01)i, *H04L9/32*(2006.01)i

According to International Patent Classification (IPC) or to both national classification and IPC

B. FIELDS SEARCHED

Minimum documentation searched (classification system followed by classification symbols)
G06F21/20, H04L9/32

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-278938 A (Fuji Xerox Co., Ltd.), 27 September 2002 (27.09.2002), paragraphs [0023] to [0025], [0077], [0121] to [0128], [0176], [0186], [0194]; fig. 2, 7, 8, 10 (Family: none) | 1-10 |
| Y | JP 2005-173930 A (Sony Corp.), 30 June 2005 (30.06.2005), abstract; claims 1 to 5; paragraphs [0018], [0023]; fig. 2, 3 (Family: none) | 1-10 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 September, 2012 (10.09.12) | 18 September, 2012 (18.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2012/067353 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2007-116602 A  (Sharp Corp.), 10 May 2007 (10.05.2007), claims 3, 4, 6; paragraphs [0013], [0018] to [0019]; fig. 5 (Family: none) | 2,3,6-9 |
| Y | JP 2005-303870 A  (Mitsubishi Electric Corp.), 27 October 2005 (27.10.2005), claim 1; paragraph [0018] (Family: none) | 3,8,9 |

Form PCT/ISA/210 (continuation of second sheet) (July 2009)

**EP 2 662 797 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007193656 A